(19) Europäisches Patentamt
European Patent Office
Office européen des brevets

(11) **EP 4 775 516 A1**

(12) **EUROPEAN PATENT APPLICATION**

(43) Date of publication:
**15.07.2026 Bulletin 2026/29**

(21) Application number: **26150505.1**

(22) Date of filing: **07.01.2026**

(51) International Patent Classification (IPC):
***B65H 1/14*** *(2006.01)* ***B65H 3/06*** *(2006.01)*
***B65H 7/06*** *(2006.01)*

(52) Cooperative Patent Classification (CPC):
**B65H 1/14; B65H 3/06; B65H 3/0684; B65H 7/06;**
B65H 2511/10; B65H 2511/20; B65H 2511/22;
B65H 2511/416; B65H 2511/515; B65H 2511/52;
B65H 2511/529; B65H 2515/10; B65H 2801/06;
B65H 2801/39

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.01.2025 JP 2025003297**

(71) Applicant: **KYOCERA Document Solutions Inc.
Osaka-shi, Osaka 540-8585 (JP)**

(72) Inventor: **FUJII, Koji
Osaka, 540-8585 (JP)**

(74) Representative: **Winter, Brandl - Partnerschaft
mbB
Alois-Steinecker-Straße 22
85354 Freising (DE)**

(54) **DOCUMENT FEEDING DEVICE AND IMAGE SCANNING APPARATUS**

(57) A document sheet (101) is put on a feeding tray (11). A lifting device (22) lifts and lowers the feeding tray. A feeding roller (12a) receives contact with the document sheet and feeds the document sheet. A sensor (42) detects that the document sheet on the feeding tray makes contact with the feeding roller. A controller (51) controls the lifting device and thereby controls a height position of the feeding tray, and performs feeding and transportation of the document sheet using the feeding roller when the sensor detects that the document sheet makes contact with the feeding roller. Further, when the feeding and transportation of the document sheet is failed, the controller performs additional lifting of the feeding tray by a specific retry distance using the lifting device and thereafter performs feeding and transportation of the document sheet again. Here, the retry distance is set on the basis of a type of the document sheet.

FIG. 5

```
                    START
                      │
          ┌───────────▼────────────┐
          │     LIFTING            │ S1
          │  THE FEEDING TRAY      │
          └───────────┬────────────┘
                      │              S2
          ◇ IS THE FEEDING TRAY ◇──── NO
          ◇ UPPERLIMIT POSITION DETECTED ? ◇
                      │ YES
          ┌───────────▼────────────┐ S3
          │     STARTING           │
          │  SHEET TRANSPORTATION  │
          └───────────┬────────────┘
                      │              S4
          ◇ IS THE SHEET TRANSPORTATION ◇──── NO
          ◇      SUCCEEDED ?       ◇
                      │ YES                          ┌─────────────────────┐ S6
                      │                              │    SETTING          │
                      │                              │  A RETRY DISTANCE   │
                      │                              └──────────┬──────────┘
                      │                              ┌──────────▼──────────┐ S7
                      │                              │ ADDITIONAL LIFTING  │
                      │                              │ OF THE FEEDING TRAY │
                      │                              │     (1ST TIME)      │
                      │                              └──────────┬──────────┘
                      │                  YES                    │           S8
                      │ ◄────────────── ◇ IS THE SHEET TRANSPORTATION ◇
                      │                  ◇      SUCCEEDED ?     ◇
                      │                              │ NO
                      │                              ┌──────────▼──────────┐ S9
                      │                              │    SETTING          │
                      │                              │ A RE-RETRY DISTANCE │
                      │                              └──────────┬──────────┘
                      │                              ┌──────────▼──────────┐ S10
                      │                              │ ADDITIONAL LIFTING  │
                      │                              │ OF THE FEEDING TRAY │
                      │                              │     (2ND TIME)      │
                      │                              └──────────┬──────────┘
                      │                  YES                    │          S11
                      │ ◄────────────── ◇ IS THE SHEET TRANSPORTATION ◇
                      │                  ◇      SUCCEEDED ?     ◇
                      │                              │ NO
          ┌───────────▼──────────┐ S5    ┌──────────▼──────────┐ S12
          │ SHEET TRANSPORTATION │       │   ERROR PROCESS     │
          └───────────┬──────────┘       └──────────┬──────────┘
                      │                              │
                      └──────────────┬───────────────┘
                                   END
```

EP 4 775 516 A1

# EP 4 775 516 A1

**Description**

BACKGROUND

1. FIELD OF THE PRESENT INVENTION

The present invention relates to a document feeding device and an image scanning apparatus.

2. DESCRIPTION OF THE RELATED ART

A document feeding device includes a feeding tray, lifting mechanism that lifts and lowers the feeding tray, and a sensor that detects that a document sheet on the feeding tray makes contact with a feeding roller with a predetermined pressure, and starts feeding and transportation of the document sheet when the sensor detects the contact of the document sheet.

As mentioned, when the document sheet is fed while the document sheet makes contact with the feeding roller, it may be considered that a contact pressure of the feeding roller to the document sheet is gained and thereby slip between the feeding roller and the document sheet is restrained in order to restrain failure of feeding or transportation due to the slip. However, when the contact pressure is gained, although the slip is restrained, the feeding roller is worn soon.

SUMMARY

A document feeding device according to the present invention includes a feeding tray on which a document sheet is put, a lifting device, a feeding roller, a sensor, and a controller. The lifting device is configured to lift and lower the feeding tray. The feeding roller is configured to receive contact with the document sheet and feed the document sheet. The sensor is configured to detect that the document sheet on the feeding tray makes contact with the feeding roller. The controller is configured to control the lifting device and thereby control a height position of the feeding tray, and perform feeding and transportation of the document sheet using the feeding roller when the sensor detects that the document sheet makes contact with the feeding roller. Further, when the feeding and transportation of the document sheet is failed, the controller performs additional lifting of the feeding tray by a specific retry distance using the lifting device and performs feeding and transportation of the document sheet again after the additional lifting. Here, the retry distance is set on the basis of a type of the document sheet.

An image scanning apparatus according to the present invention includes the aforementioned document feeding device; and an image sensor configured to scan an image of a document sheet in transportation.

These and other objects, features and advantages of the present invention will become more apparent upon reading of the following detailed description along with the accompanied drawings.

BRIEF DESCRIPTION OF THE DRAWINGS

Fig. 1 shows a side view of an internal configuration of an image scanning apparatus in the present invention;
Fig. 2 shows a block diagram that indicates an electronic configuration of an automatic document feeder 4 shown in Fig. 1.
Fig. 3 shows a diagram that explains a height position of a feeding tray 11;
Fig. 4 shows a diagram that explains contact of a document sheet on the feeding tray 11 with a feeding roller 12a; and
Fig. 5 shows a flowchart that explains a feeding operation of the image scanning apparatus shown in Figs. 1 and 2.

DETAILED DESCRIPTION

Hereinafter, an embodiment according to an aspect of the present invention will be explained with reference to drawings.

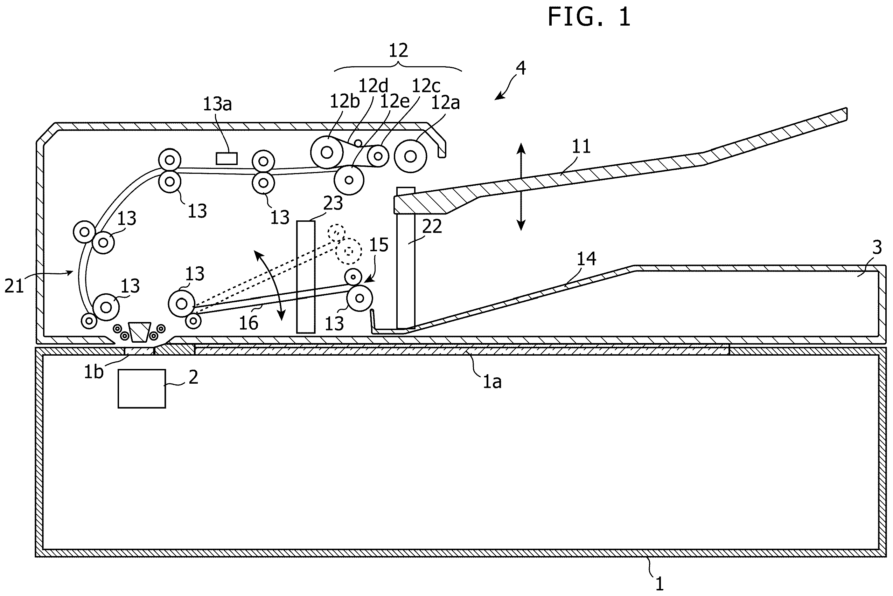

Fig. 1 shows a side view of an internal configuration of an image scanning apparatus in the present invention. The image scanning apparatus shown in Fig. 1 is an apparatus such as scanner, copier, facsimile device, or multi function peripheral, and includes an auto document feeder as a document feeding device.

The image scanning apparatus shown in Fig. 1 includes an apparatus main body 1, contact glasses 1a and 1b arranged on an upper surface of the main body 1, an image sensor 2, and a document cover 3. The document cover 3 includes the auto document feeder 4.

The contact glass 1a is a transparent member on which a document is put when performing image scanning without the auto document feeder 4. The contact glass 1b is a transparent member on which a document passes when performing image scanning of a document image while automatically transporting a document with the auto document feeder 4.

The image sensor 2 scans a document image from a document sheet. Specifically, if image scanning of a document image is performed while automatically transporting a document with the auto document feeder 4, the image sensor 2 is a sensor that optically scans an image of a document sheet that passes at a predetermined position in a transportation path of a document. The image sensor 2 scans the document image line by line. The image sensor 2 includes a light source (light emitting diode or the like) and a light receiving element (line sensor or the like), causes the light source to emit light, and causes the light receiving element to detect reflection light that reflects a document or the like through the contact glass 1a or 1b, and outputs an electric signal corresponding to a light amount of the reflection light. A controller 51 mentioned below receives this electric signal, and generates a document image (i.e. image data of the document image) on the basis of this electric signal.

A document cover 3 is a rotatable member installed so as to be capable of contacting with a surface area of the contact glass 1a when it rotates, and presses a document against the contact glass 1a and prevents environmental light from entering through the contact glass 1a to the inside of the apparatus during image scanning. Further, the auto document feeder 4 includes a feeding tray 11 on which a document sheet is put, and a transportation device 21 that transports the document sheet from the feeding tray 11 to an output tray 14 through a scanning position of the image sensor 2; and causes a document sheet put on the feeding tray 11 to pass at a position on the contact glass 1b sheet by sheet and output the document sheet onto the output tray 14. Specifically, the transportation device 21 includes a feeding unit 12, transportation rollers 13 arranged along a transportation path, and a transportation sensor 13a that is arranged at a predetermined position in the transportation path and detects a document sheet in transportation; and feeds a document sheet using the feeding unit 12 and transports the document sheet using the transportation rollers 13.

The feeding unit 12 includes a feeding roller 12a, a driving roller 12b, a driven roller 12c, a transportation belt 12d, and an auxiliary roller 12e, and draws a document sheet on the feeding tray 11 into the transportation path along the transportation belt 12d using the feeding roller 12a sheet by sheet.

Further, the image sensor 2 can change an image scanning position using an unshown driving device; and when performing image scanning with the auto document feeder 4, the image scanning position of the image sensor 2 is set to agree with a passing position of a document on the contact glass 1b, and the image sensor 2 optically scans an image of the document in transportation by the auto document feeder 4 when the document passes on the contact glass 1b. Here, the image sensor 2 is a color image sensor, and scans document images of plural colors such as RGB at image scanning positions different from each other along a transportation direction. In this embodiment, a CIS (Contact Image Sensor) is used as the image sensor 2; and if image scanning is performed with the auto document feeder 4, the image sensor 2 is arranged right below the contact glass 1b.

The feeding roller 12a, the driving roller 12b and the transportation roller 13 are driven by a driving device (not shown) such as a motor.

The output tray 14 is a tray on which piled are document sheets that are outputted and fallen through an ejection port 15 at an end of the transportation path. The ejection port 15 outputs a document sheet onto the output tray 14 at the end of the transportation path.

Further, the image scanning apparatus shown in Fig. 1 includes a lifting device 22 that lifts and lowers the feeding tray 11 in accordance with an existing lifting and lowering manner, and a lifting device 23 that lifts and lowers the ejection port 15 in accordance with an existing lifting and lowering manner. Specifically, the lifting device 23 causes the transportation roller 13 at the end of the transportation path with a termination transportation path 16 to rotate around a predetermined support point as a center of the rotation, and thereby lifts and lowers the ejection port 15.

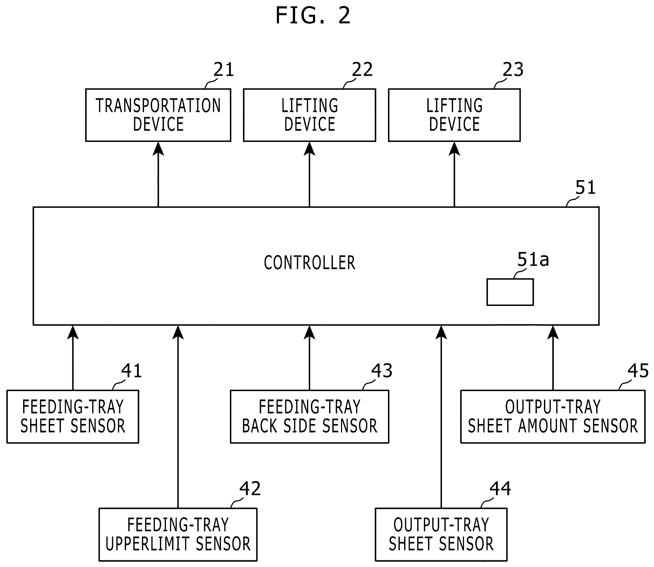

Fig. 2 shows a block diagram that indicates an electronic configuration of an automatic document feeder shown in Fig. 1. As shown in Fig. 2, this image scanning apparatus further includes a feeding-tray sheet sensor 41, a feeding-tray upperlimit sensor 42, a feeding-tray back side sensor 43, an output-tray sheet sensor 44, an output-tray sheet amount sensor 45, and a controller 51.

The feeding-tray sheet sensor 41 detects a document sheet on the feeding tray 11, and outputs a sensor signal that indicates existence of a document sheet.

The feeding-tray upperlimit sensor 42 detects that the feeding tray 11 or (an upper surface of) a document sheet put on the feeding tray 11 makes contact with the feeding roller 12a.

Here, the feeding roller 12a is energized downward, and when a document sheet or the like makes contact with the feeding roller 12a, the feeding roller 12a is pushed up against the energizing force, and when the feeding roller 12a is pushed up more, a contact pressure between the feeding roller 12a and the document sheet or the like gets higher.

The feeding-tray back side sensor 43 is arranged on a back side of the feeding tray 11, and detects contact of an object (a document sheet on the output tray 14 or the like). The output-tray sheet sensor 44 detects a document sheet on the output tray 14, and outputs a sensor signal that indicates existence of a document sheet. The output-tray sheet amount sensor 45 detects an amount of a document sheet (i.e. a thickness of a document sheet bunch) on the output tray 14.

The controller 51 includes a processor that executes a program, an ASIC (Application Specific Integrated Circuit) and/or the like, and controls the auto document feeder 4 (i.e. the transportation device 21, the lifting devices 22, 23 and the like) and thereby performs transportation of a document sheet, and performs image scanning using the image sensor 2 and thereby acquires image data of an image of the document sheet (i.e. a document image).

Further, the controller 51 controls the lifting device 22 and thereby changes a height position of the feeding tray 11, and controls the lifting device 23 and thereby changes a height position of the ejection port 15. Further, the controller 51 performs feeding and transportation of a document sheet using the feeding roller 12a.

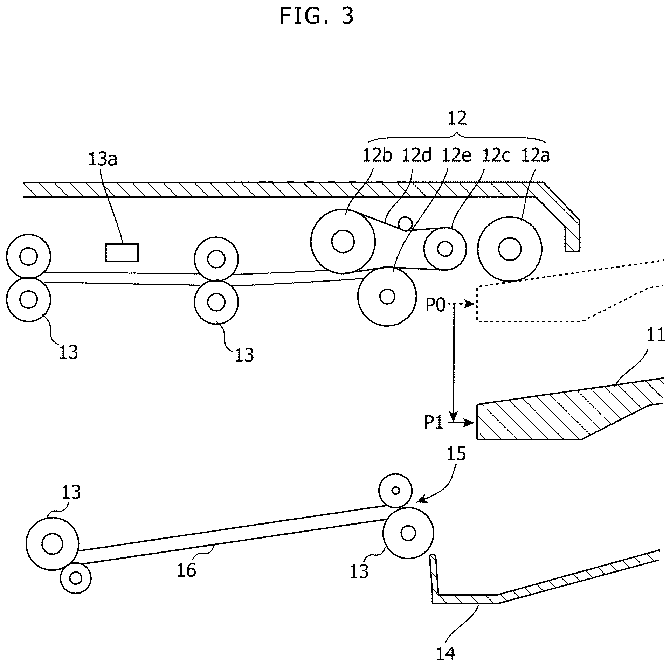

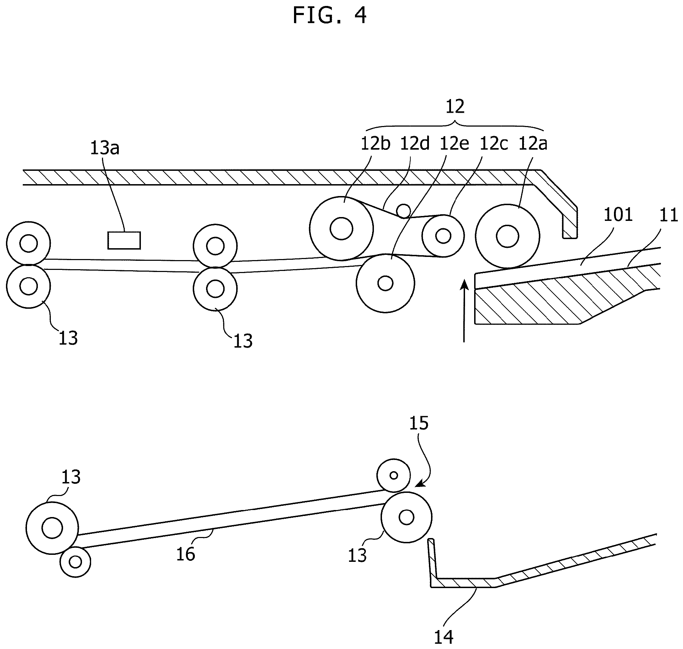

Fig. 3 shows a diagram that explains a height position of a feeding tray 11. Fig. 4 shows a diagram that explains contact of a document sheet on the feeding tray 11 with a feeding roller 12a.

In a waiting status, as shown in Fig. 3, for example, the controller 51 arranges the feeding tray 11 at a lower position P1, where the lower position P1 is a position at a predetermined distance from a height position P0 of the feeding tray 11 when the empty feeding tray 11 makes contact with the feeding roller 12a. Further, in a feeding operation after a document sheet 101 is put on the feeding tray 11, as shown in Fig. 4, for example, the controller 51 lifts up the feeding tray 11 using the lifting device 22 until the feeding-tray upperlimit sensor 42 detects contact of the document sheet 101 with the feeding roller 12a; and thereafter, the controller 51 starts feeding the document sheet 101 (a top document sheet in the document sheet bunch) using the feeding roller 12a.

Furthermore, if the feeding and transportation of the document sheet 101 is failed, the controller 51 performs additional lifting of the feeding tray 11 by a specific retry distance using the lifting device 22 and performs feeding and transportation of the document sheet 101 again after the additional lifting. Here, the retry distance is set on the basis of a type of the document sheet 101.

Further, in this embodiment, when the feeding and transportation of the document sheet is failed after the first additional lifting, the controller 51 performs repeated additional lifting (i.e. second additional lifting) of the feeding tray by a specific re-retry distance using the lifting device 22 and performs transportation of the document sheet again after the repeated additional lifting. Here, the re-retry distance is shorter than the retry distance.

Here, the aforementioned retry distance and the aforementioned re-retry distance are set on the basis of at least one of a size and a paper quality of the document sheet 101.

The size of the document sheet 101 may be detected using a cursor (not shown) of the feeding tray 11. The size or the paper quality may be inputted by a user using an input device such as touch panel or hard keys (not shown), and the controller 51 may determine the inputted size or the inputted paper quality.

Further, in this embodiment, the controller 51 includes a storage device 51a (e.g. rewritable non-volatile memory such as flash memory) that stores editable setting data, and the controller 51 reads the setting data from the storage device 51a and sets the retry distance on the basis of the setting data. In this case, the controller 51 edits the setting data (i.e. the retry distance or the re-retry distance) in the storage device 51a in accordance with a user operation to the input device (not shown).

For example, the retry distance and the re-retry distance for the document sheet 101 as a plain paper sheet are set as 0.2 mm and 0.1 mm, respectively; and the retry distance and the re-retry distance for the document sheet 101 as a card paper sheet or a thick paper sheet are set as 0.4 mm and 0.2 mm, respectively. As mentioned, for a thicker document sheet 101, the retry distance and the re-retry distance are set to be longer.

Further, for example, for a document sheet 101 larger than a reference size (here, A4), the retry distance and the re-retry distance are adjusted correspondingly to the size, for example, in accordance with the following formulas. Specifically, for the large size, the retry distance and the re-retry distance are set to be longer.

(Retry distance of a document sheet) = (Retry distance at the reference size) $\times$ (Size of the document sheet) / (Reference size) (Re-retry distance of a document sheet) = (Re-retry distance at the reference size) $\times$ (Size of the document sheet) / (Reference size)

The following part explains a behavior of the aforementioned image scanning apparatus.

(a) Waiting status

In a waiting status, as shown in Fig. 3, for example, the controller 51 arranges the feeding tray 11 at a predetermined height position P1.

(b) In feeding and transportation of a document sheet

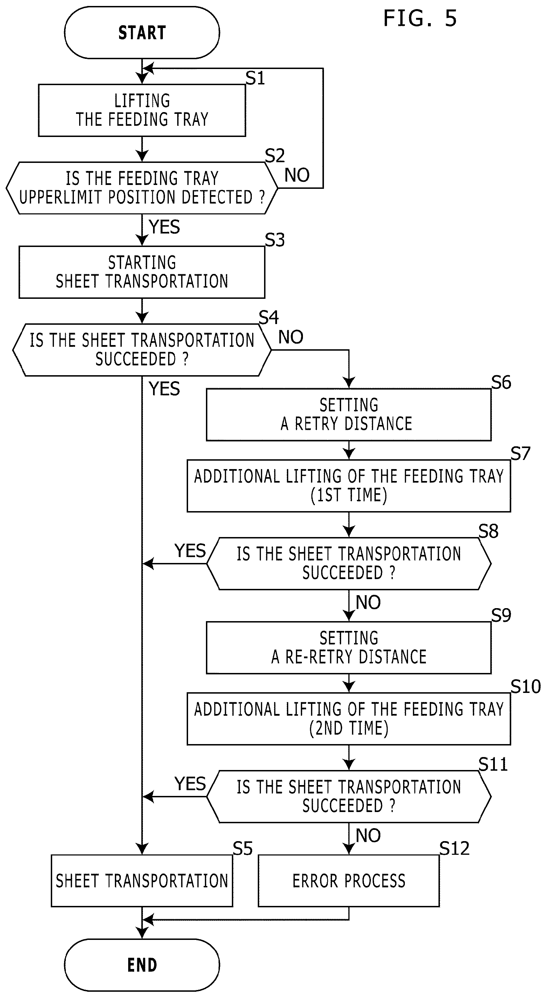

Fig. 5 shows a flowchart that explains a feeding operation of the image scanning apparatus shown in Figs. 1 and 2.

When a document sheet 101 is put on the feeding tray 11, as shown in Fig. 4, for example, the controller 51 lifts up the feeding tray 11 until the document sheet makes contact with the feeding roller 12a (i.e. until the feeding-tray upperlimit sensor 42 detects the contact) (in Steps S1 and S2).

Further, the controller 51 starts feeding and transportation of the document sheet 101 (in Step S3). Afterward, the controller 51 determines whether the feeding and transportation of the document sheet 101 is succeeded or not (in Step S4). If the document sheet 101 is detected by the transportation sensor 13a until a predetermined time elapses from starting of the feeding and transportation, then the controller 51 determines that the feeding and transportation of the document sheet 101 is succeeded, and otherwise if not, the controller 51 determines that the feeding and transportation of the document sheet 101 is failed.

If it is determined that the feeding and transportation of the document sheet 101 is succeeded, then the controller 51 causes the transportation rollers 13 to continue to perform the transportation operation, performs image scanning of the document sheet 101 using the image sensor 2, and thereafter outputs the document sheet 101 (in Step S5).

Contrarily, if it is determined that the feeding and transportation of the document sheet 101 is failed, the controller 51 stops the feeding and transportation and sets a retry distance based on a type of the document sheet 101 as mentioned (in Step S6), and performs additional lifting of the feeding tray 11 by the retry distance using the lifting device 22 (in Step S7).

After the additional lifting, the controller 51 starts feeding and transportation of the document sheet 101, and determines whether the feeding and transportation of the document sheet 101 is succeeded or not (in Step S8). If it is determined that the feeding and transportation of the document sheet 101 is succeeded, then the controller 51 causes the transportation rollers 13 to continue to perform the transportation operation, performs image scanning of the document sheet 101 using the image sensor 2, and thereafter outputs the document sheet 101 (in Step S5).

Contrarily, if it is determined that the feeding and transportation of the document sheet 101 after the additional lifting is failed, the controller 51 stops the feeding and transportation and sets a re-retry distance based on a type of the document sheet 101 as mentioned (in Step S9), and performs additional lifting of the feeding tray 11 by the re-retry distance using the lifting device 22 (in Step S10).

After the second additional lifting, the controller 51 starts feeding and transportation of the document sheet 101, and determines whether the feeding and transportation of the document sheet 101 is succeeded or not (in Step S11). If it is determined that the feeding and transportation of the document sheet 101 is succeeded, then the controller 51 causes the transportation rollers 13 to continue to perform the transportation operation, performs image scanning of the document sheet 101 using the image sensor 2, and thereafter outputs the document sheet 101 (in Step S5).

Contrarily, if it is determined that the feeding and transportation of the document sheet 101 after the second additional lifting is failed, the controller 51 stops the feeding and transportation and performs an error process (cancellation of the feeding and transportation, notification to a user and/or the like) (in Step S12).

As mentioned, in the aforementioned embodiment, the lifting device 22 lifts and lowers the feeding tray 11 on which a document sheet 101 is put. The feeding roller 12a receives contact with the document sheet 101 and feeds the document sheet 101. The feeding-tray upperlimit sensor 42 detects that the document sheet 101 put on the feeding tray 11 makes contact with the feeding roller 12a. The controller 51 controls the lifting device 22 and thereby controls a height position of the feeding tray 11, and performs feeding and transportation of the document sheet 101 using the feeding roller 12a. Furthermore, if the feeding and transportation of the document sheet 101 is failed, the controller 51 performs additional lifting of the feeding tray 11 by a specific retry distance using the lifting device 22 and performs feeding and transportation of the document sheet 101 again after the additional lifting. Here, the retry distance is set on the basis of a type of the document sheet 101.

Consequently, adjusted is a height position of the feeding tray 11 located when the document sheet 101 makes contact with the feeding roller 12a, and thereby the contact pressure is adjusted, and therefore, the document sheet makes contact with the feeding roller 12a with a proper contact pressure and the document sheet is smoothly fed.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

**Claims**

**1.** A document feeding device, comprising:

a feeding tray on which a document sheet is put;

a lifting device configured to lift and lower the feeding tray;

a feeding roller configured to receive contact with the document sheet and feed the document sheet;

a sensor configured to detect that the document sheet on the feeding tray makes contact with the feeding roller; and

a controller configured to control the lifting device and thereby control a height position of the feeding tray, and perform feeding and transportation of the document sheet using the feeding roller when the sensor detects that the document sheet makes contact with the feeding roller;

wherein when the feeding and transportation of the document sheet is failed, the controller performs additional lifting of the feeding tray by a specific retry distance using the lifting device and performs feeding and transportation of the document sheet again after the additional lifting; and

the retry distance is set on the basis of a type of the document sheet.

2. The document feeding device according to claim 1, wherein the retry distance is set on the basis of at least one of a size and a paper quality of the document sheet.

3. The document feeding device according to claim 1, wherein when the feeding and transportation of the document sheet is failed after the additional lifting, the controller performs repeated additional lifting of the feeding tray by a specific re-retry distance using the lifting device and performs transportation of the document sheet again after the repeated additional lifting; and

the re-retry distance is shorter than the retry distance.

4. The document feeding device according to claim 1, further comprising a storage device configured to store editable setting data;

wherein the controller sets the retry distance on the basis of the setting data.

5. An image scanning apparatus,

the document feeding device according to any of claims 1 to 4; and

an image sensor configured to scan an image of a document sheet in transportation.

# FIG. 1

EP 4 775 516 A1

# FIG. 2

```
┌─────────────────┐  ┌─────────────────┐  ┌─────────────────┐
│  TRANSPORTATION │  │     LIFTING     │  │     LIFTING     │
│      DEVICE     │  │     DEVICE      │  │     DEVICE      │
└─────────────────┘  └─────────────────┘  └─────────────────┘
         21                   22                   23
         ▲                    ▲                    ▲
         │                    │                    │
┌──────────────────────────────────────────────────────────────┐
│                                                          51    │
│                                                               │
│                   CONTROLLER                      51a         │
│                                             ┌──────┐          │
│                                             └──────┘          │
└──────────────────────────────────────────────────────────────┘
     ▲          ▲              ▲              ▲           ▲
     │          │              │              │           │
┌──────────┐    │      ┌──────────────┐       │    ┌──────────────────┐
│FEEDING-  │    │      │ FEEDING-TRAY │       │    │  OUTPUT-TRAY     │
│TRAY      │    │      │BACK SIDE     │       │    │SHEET AMOUNT      │
│SHEET     │    │      │  SENSOR      │       │    │   SENSOR         │
│SENSOR    │    │      └──────────────┘       │    └──────────────────┘
└──────────┘    │            43               │          45
    41          │                             │
         ┌──────────────┐            ┌──────────────┐
         │ FEEDING-TRAY │            │ OUTPUT-TRAY  │
         │UPPERLIMIT    │            │ SHEET SENSOR │
         │  SENSOR      │            └──────────────┘
         └──────────────┘                 44
               42
```

FIG. 3

FIG. 4

FIG. 5

```
                    ┌─────────────┐
                    │    START    │
                    └──────┬──────┘
                           │         ┌──────────┐
                           ▼         │          S1
                    ┌──────────────┐ │
                    │   LIFTING    │ │
                    │THE FEEDING TRAY│
                    └──────┬───────┘ │
                           ▼         │          S2
                    ╱───────────────╲│  NO
                   ╱ IS THE FEEDING  ╲──────────┘
                   ╲ TRAY UPPERLIMIT ╱
                    ╲POSITION DETECTED?╱
                     ╲───────┬───────╱
                        YES  │
                             ▼                  S3
                    ┌──────────────┐
                    │   STARTING   │
                    │SHEET TRANSPORTATION│
                    └──────┬───────┘
                           ▼                    S4
                    ╱───────────────╲
                   ╱IS THE SHEET     ╲  NO
                   ╲TRANSPORTATION    ╱────────────┐
                    ╲SUCCEEDED?      ╱             │
                     ╲──────┬───────╱              ▼            S6
                        YES │              ┌──────────────────┐
                            │              │     SETTING       │
                            │              │  A RETRY DISTANCE  │
                            │              └────────┬──────────┘
                            │                       ▼           S7
                            │              ┌──────────────────┐
                            │              │ADDITIONAL LIFTING │
                            │              │OF THE FEEDING TRAY│
                            │              │    (1ST TIME)     │
                            │              └────────┬──────────┘
                            │                       ▼           S8
                            │          YES ╱───────────────╲
                            │◄─────────────╲IS THE SHEET    ╱
                            │              ╱TRANSPORTATION   ╲
                            │              ╲SUCCEEDED?      ╱
                            │               ╲──────┬───────╱
                            │                   NO │
                            │                      ▼            S9
                            │              ┌──────────────────┐
                            │              │     SETTING       │
                            │              │ A RE-RETRY DISTANCE│
                            │              └────────┬──────────┘
                            │                       ▼          S10
                            │              ┌──────────────────┐
                            │              │ADDITIONAL LIFTING │
                            │              │OF THE FEEDING TRAY│
                            │              │    (2ND TIME)     │
                            │              └────────┬──────────┘
                            │                       ▼          S11
                            │          YES ╱───────────────╲
                            │◄─────────────╲IS THE SHEET    ╱
                            │              ╱TRANSPORTATION   ╲
                            │              ╲SUCCEEDED?      ╱
                            │               ╲──────┬───────╱
                            │                   NO │
                            ▼        S5           ▼          S12
                    ┌──────────────┐      ┌──────────────┐
                    │    SHEET     │      │ERROR PROCESS │
                    │TRANSPORTATION│      │              │
                    └──────┬───────┘      └──────┬───────┘
                           │                     │
                           ▼─────────────────────┘
                    ┌─────────────┐
                    │     END     │
                    └─────────────┘
```

# EP 4 775 516 A1

**EUROPEAN SEARCH REPORT**

Application Number

EP 26 15 0505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/101600 A1 (CHIHARA HIROSHI [JP] ET AL) 5 May 2011 (2011-05-05) * the whole document * ----- | 1-5 | INV. B65H1/14 B65H3/06 B65H7/06 |
| X | US 2024/199353 A1 (OGASAWARA HIRONORI [JP]) 20 June 2024 (2024-06-20) * the whole document * ----- | 1-5 | |
| A | US 9 963 310 B2 (KYOCERA DOCUMENT SOLUTIONS INC [JP]) 8 May 2018 (2018-05-08) * the whole document * ----- | 1-5 | |

TECHNICAL FIELDS SEARCHED (IPC)

B65H

The present search report has been drawn up for all claims

| Place of search | Date of completion of the search | Examiner |
|---|---|---|
| The Hague | 28 May 2026 | Athanasiadis, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 775 516 A1

### ANNEX TO THE EUROPEAN SEARCH REPORT
### ON EUROPEAN PATENT APPLICATION NO.

EP 26 15 0505

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | | Publication date | Patent family member(s) | | Publication date |
|---|---|---|---|---|---|
| US 2011101600 | A1 | 05-05-2011 | JP | 5683478 B2 | 11-03-2015 |
| | | | JP | WO2011052059 A1 | 14-03-2013 |
| | | | US | 2011101600 A1 | 05-05-2011 |
| | | | WO | 2011052059 A1 | 05-05-2011 |
| US 2024199353 | A1 | 20-06-2024 | JP | 2024087203 A | 01-07-2024 |
| | | | US | 2024199353 A1 | 20-06-2024 |
| US 9963310 | B2 | 08-05-2018 | CN | 107298325 A | 27-10-2017 |
| | | | JP | 6536462 B2 | 03-07-2019 |
| | | | JP | 2017190236 A | 19-10-2017 |
| | | | US | 2017297838 A1 | 19-10-2017 |

EPO FORM P0459

For more details about this annex : see Official Journal of the European Patent Office, No. 12/82